# EUROPEAN PATENT SPECIFICATION

(11) **EP 2 072 208 B1**
(45) Date of publication and mention of the grant of the patent: **17.08.2016**
(21) Application number: 08394042.9
(22) Date of filing: 17.11.2008
(51) Int. Cl.: B29C 44/06, B29C 44/32, B65G 57/00, B29C 35/16

(54) **Manufacture of insulating board**
Herstellung einer Isolierplatte
Fabrication de planche isolante

(30) Priority: 21.12.2007 IE 20070933
(43) Date of publication of application: 24.06.2009
(73) Proprietor: Kingspan Research and Developments Limited, Kingscourt, County Cavan (IE)
(72) Inventor: Rochefort, Malcolm, Kingscourt County Cavan (IE); McCabe, Thomas, Kingscourt County Cavan (IE)
(74) Representative: Tomkins & Co

(56) References cited:
- EP-A- 0 835 750
- EP-A- 1 790 452
- GB-A- 2 325 643
- JP-A- 2006 028 288
- US-A- 6 117 375
- US-B1- 6 345 652

## Description

The invention relates to the manufacture of a rigid polymeric insulating foam board of the type comprising upper and lower facers and a foam insulating body between the facers.

EP-A-179 0452 describes a method for manufacturing a rigid polymeric insulating foam board of the type comprising a lower face, an upper face, and a foam layer between the facers.

US-A-6, 117, 375 describes the manufacture of facerless foam boards. The facerless boards are separated by a separator comprising flexible arms which are held at one end by a frame member. The flexible arms are of a flexible material that does not bond or adhere to the facerless boards.

JP 2006 028288 describes a method of manufacturing a specific type of phenolic resin forming body using a hot wind curing oven and spacers.

There are several known methods for manufacturing such rigid polymeric insulating foam boards. There is, however, a need to optimise the rate of production of such boards with optimised quality, reduced raw material costs, reduced labour costs and reduced reject rates.

This invention is directed towards providing an improved manufacturing process which will meet at least some of these requirements.

### Statements of Invention

According to the invention there is provided a method for manufacturing a rigid polymeric insulating foam board of the type comprising a lower facer, an upper facer, and a foam layer between the facers, the method comprising the steps of:
leading a lower facer to a lay-down area;
laying liquid foam reactants onto the lower facer;
leading an upper facer over the foam reactants;
leading the sandwich thus formed into an oven in which the foam expands and a continuous length of foam board is formed;
leading the foam board from the oven through a foam curing station;
cutting the cured foam board to a length;
forming a stack of cut lengths of boards;
inserting spacers between adjacent boards in a stack; and
stack curing the stack of boards wherein the spacers (55) comprise a plurality of spacer strips (55) which are spaced apart across a board (51); and
further comprising turning alternate cut board lengths over during stack formation.

In a preferred embodiment, after curing, the spacers are removed from the stack.

In one case the method comprises de-stacking the boards to remove the spacers.

The spacers comprise a plurality of spacer strips and the method comprises spacing the strips apart across a board.

In one case the strips extend longitudinally along the board and the strips are spaced-apart transversely across the board.

The spacer strips may, for example, be of a material selected from metal, wood and/or plastics material.

In one case the liquid foam reactants are laid down in a plurality of spaced-apart streams onto the base facer.

The method may comprise heating the base facer with the streams applied thereon, prior to application of the upper facer.

In one embodiment the oven comprises a laminator having upper and lower laminator conveyors, the upper laminator conveyor checking the rise of the foam and preventing over-expansion.

The method may comprise the step of in-line cutting a rebated edge in the panel. The rebated edge may be a side edge and/or the rebated edge is an end edge.

The method of the invention provides a rigid foam board.

### Brief Description of Drawings

The invention will be more clearly understood from the following description thereof given by way of example only with reference to the accompanying drawings in which:-
Fig. 1 is a perspective, partially cut-away view of a stack of foam boards formed in a method for manufacturing a foam board according to the invention;
Fig. 2 is a plan view of one board with spacers in place;
Fig. 3 is a side cross sectional view of a lay down and oven region of an apparatus used in a method of the invention; and
Fig. 4 is a cross sectional view of a laminator used in a method of the invention.

### Detailed Description

The invention provides a method for manufacturing a rigid polymeric insulating foam board comprising a lower facer 1, an upper facer 2 and a foam layer 3 between the facers.

The upper and lower facers 1, 2 may be of the same or different flexible materials. For example the, or each, facer may be of a paper, foil, glass fibre, plastic or any other suitable material or laminate of two or more of such materials.

The foam 3 may be of any suitable type including a polyurethane, polyisocyanurate or phenolic foam formed from appropriate reactant ingredients.

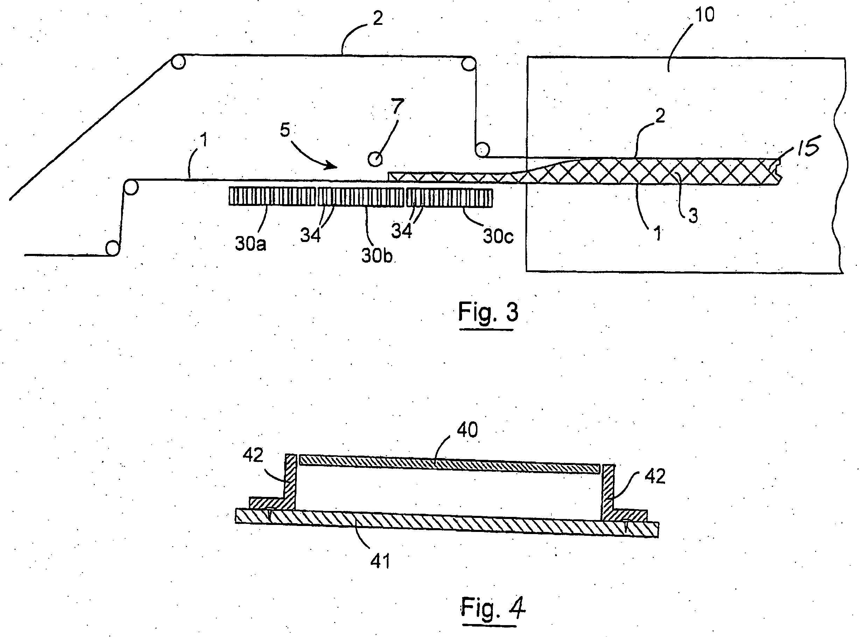

Referring particularly to Fig. 3, in a method within the present invention the lower facer 1 is led from a supply reel to a lay-down area 5 at which liquid foam reactants are laid down onto the lower facer 1 through a lay-down head 7. The upper facer 2 is led from a supply reel over the foam reactants. The sandwich thus formed is then led through a laminator oven 10 in which the foam expands and a continuous length of rigid polymeric insulating foam board 15 is formed. The board 15 is led through an insulated housing and then cut to a desired length.

The lower facer 1 may be preheated by leading the facer 1 over a heated bed 30 which may be heated to a temperature of from 35 to 85°C. In this case the heated bed 30 comprises a number of separate in-line sections such as three sections 30a, 30b, 30c over which the facer 1 is led. Each of the heater bed sections 30a, 30b, 30c has embedded channels for flow of heating fluid. Between the channels the bed sections have a plurality of through vertical passageways 34 through which a vacuum may be drawn by a vacuum box and associated vacuum pump. A vacuum may be applied to the passageways 34 to draw the facer 1 onto the surface of the heater to further enhance heat transfer to the facer.

The heater bed sections 30a, 30b are typically heated to about 60°C and as the facer 1 is led over the heated bed it is heated so that when the liquid foam reactants 6 impinge on the facer they are immediately heated. This speeds up the reaction and aids the spread of the liquid foam reactants across the facer. The facer 2 may also be preheated by passage through portion of the laminator 10 which is typically at about 60°C prior to application to the foam. Because the facer 1 can be preheated the prepolymer reactants delivered through the lay down head 7 can be relatively cool which maximises the useful operating life of the lay-down head 7.

Referring to Fig. 4 the laminator 10 may comprise an upper slatted conveyor 40 and a lower slatted conveyor 41 which define a fixed gap therebetween to which the foam sandwich is allowed to rise. The upper laminator conveyor 40 checks the rise of the foam and prevents over-expansion. In this case side flights 42 are fixed to and move with the lower conveyor 41. Each slat of the conveyor 41 has an associated side flight 42. A release agent is applied to the surface of the flights 42 facing the foam board sandwich to aid release of the flight 42 from the board as the board exits the laminator. The flights 42 provide clean side edges on the foam board which minimises wastage on trimming.

The foam board is led from the oven through a foam curing station comprising a conveyor along which the foam board is led and a substantially closed housing for the conveyor. Heated air at a temperature of at least 30°C and possibly up to 130°C is directed through the housing.

After curing, the foam board is cut to length. The side edges of the board may be trimmed and, if desired, one or more side edges of the board may be re-bated on-line.

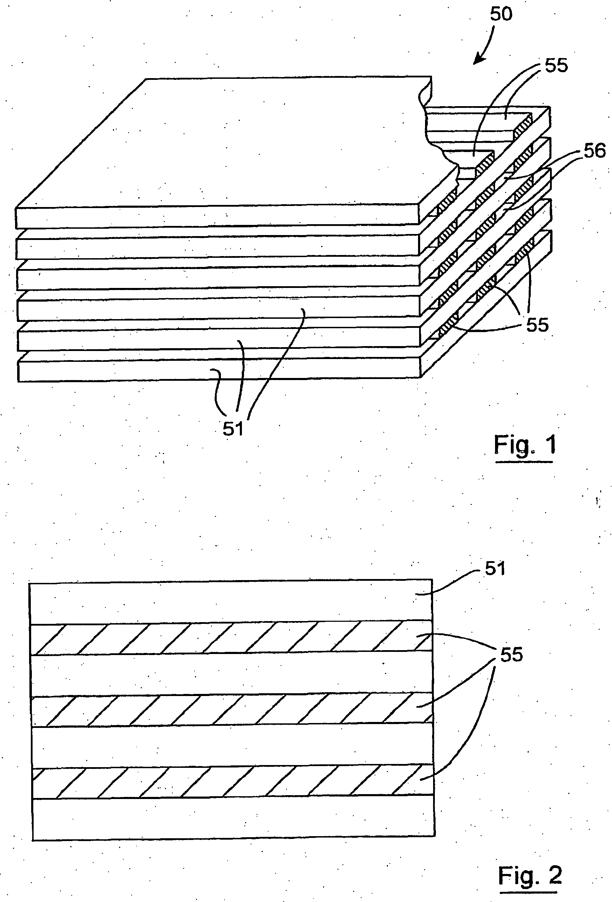

Referring especially to Figs. 1 and 2 a stack 50 of the cut lengths of boards 51 is formed. Spacers 55 are inserted between adjacent boards 51 in a stack. In this case there are three spacers 55 that extend the length of the boards 51. The spacers 55 are arranged longitudinally and are transversely spaced-apart to create channels 56 therebetween through which air can circulate during stack curing.

Alternate boards 51 may be turned over through 180° prior to stacking. This may assist in curing efficiency.

After stack curing, the boards 51 are removed from the stack 50. The spacer strips are removed and re-used. The cured boards are then made ready for transportation by re-stacking and wrapping.

The spacers 55 in this case comprise strips of a suitable metal, wood, or plastics material. The strips may be of a composite material.

We have found that the use of spacers between the boards during stack curing optimises stack curing. The rate of production and quality are optimised with reduced costs, especially due to reduced rejects.

## Claims

1. A method for manufacturing a rigid polymeric insulating foam board of the type comprising a lower facer (1), an upper facer (2), and a foam layer (3) between the facers (12), the method comprising the steps of:
leading a lower facer (1) to a lay-down area (5);
laying liquid foam reactants onto the lower facer (1);
leading an upper facer (2) over the foam reactants;
leading the sandwich thus formed into an oven (10) in which the foam expands and a continuous length of foam board is formed;
leading the foam board (15) from the oven (10) through a foam curing station;
cutting the foam board to a length (51);
forming a stack (50) of cut lengths of boards (51);
inserting spacers (55) between adjacent boards (51) in a stack (50);
wherein the spacers (55) comprise a plurality of spacer strips (55) which are spaced apart across a board (51); and stack curing the stack (50) of boards (51), and
further comprising turning alternate cut board lengths (51) over during stack formation.

2. A method as claimed in claim 1 wherein after curing, the spacers (55) are removed from the stack (50).

3. A method as claimed in claim 2 comprising de-stacking the boards (51) to remove the spacers (55).

4. A method as claimed in any of claims 1 to 3 wherein the strips (55) extend longitudinally along the board (51) and the strips (55) are spaced-apart transversely across the board (51).

5. A method as claimed in any preceding claim wherein the spacer strips (55) are of a material selected from metal, wood and/or plastics material.

6. A method as claimed in any preceding claim wherein the oven (10) comprises a laminator having upper and lower laminator conveyors (40, 41), the upper laminator conveyor (40) checking the rise of the foam and preventing over-expansion.

7. A method as claimed in any preceding claim wherein the liquid foam reactants are laid down in a plurality of spaced-apart streams onto the base facer.

8. A method as claimed in Claim 7 wherein the method comprises heating the base facer with the streams applied thereon, prior to application of the upper facer.

9. A method as claimed in any preceding claim comprising the step of in-line cutting a rebated edge in the panel.

10. A method as claimed in Claim 9 wherein the rebated edge is a side edge and/or the rebated edge is an end edge.

## Patentansprüche

1. Verfahren zur Herstellung einer steifen Polymerisolierschaumplatte der Bauart, welche eine untere Verkleidung (1), eine obere Verkleidung (2) und eine Schaumschicht (3) zwischen den Verkleidungen (1, 2) aufweist, wobei das Verfahren folgende Schritte aufweist:
Führen einer unteren Verkleidung (1) auf einen Ablagebereich (5);
Auslegen von flüssigen Schaumreaktionsmitteln auf der unteren Verkleidung (1);
Führen einer oberen Verkleidung (2) über die Schaumreaktionsmittel;
Führen der so geformten Sandwich-Anordnung in einen Ofen (10), in dem sich der Schaum ausdehnt und ein kontinuierliches Stück der Schaumplatte geformt wird;
Leiten der Schaumplatte (15) aus dem Ofen (10) durch eine Schaumaushärtungsstation;
Schneiden der Schaumplatte auf ein Teilstück (51);
Formen eines Stapels (50) von abgeschnittenen Teilstücken der Platten (51);
Einführen von Abstandshaltern (55) zwischen benachbarten Platten (51) in einem Stapel (50);
wobei die Abstandshalter (50) eine Vielzahl von Abstandshalterstreifen (55) aufweisen, die über eine Platte (51) hinweg beabstandet sind; und Aushärten des Stapels (50) von Platten (51) als Stapel, und
wobei es weiter aufweist, abwechselnd geschnittene Plattenteilstücken (51) während des Formens zu drehen.

2. Verfahren nach Anspruch 1, wobei die Abstandshalter (55) nach dem Aushärten vom Stapel (50) entfernt werden.

3. Verfahren nach Anspruch 2, welches aufweist, die Platten (51) vom Stapel zu nehmen, um die Abstandshalter (55) zu entfernen.

4. Verfahren nach einem der Ansprüche 1 bis 3, wobei die Streifen (55) sich in Längsrichtung entlang der Platte (51) erstrecken und die Streifen (55) in Querrichtung über die Platten (51) beabstandet sind.

5. Verfahren nach einem vorhergehenden Anspruch, wobei die Abstandshalterstreifen (55) aus einem Material sind, welches aus Metall, Holz und/oder Plastikmaterial ausgewählt ist.

6. Verfahren nach irgendeinem vorhergehenden Anspruch, wobei der Ofen (10) einen Laminator aufweist, der obere und untere Laminatorfördervorrichtungen (40, 41) hat, wobei die obere Laminatorfördervorrichtung (40) das Aufgehen des Schaums überprüft bzw. bestimmt und eine übermäßig große Ausdehnung verhindert.

7. Verfahren nach irgendeinem vorhergehenden Anspruch, wobei die flüssigen Schaumreaktionsmittel in einer Vielzahl von beabstandeten Strömen auf die unten liegende Verkleidung ausgelegt werden.

8. Verfahren nach Anspruch 7, wobei das Verfahren aufweist, die unten liegende Verkleidung mit den Strömen, die darauf aufgebracht werden, vor dem Aufbringen der oberen Verkleidung aufzuheizen.

9. Verfahren nach irgendeinem vorhergehenden Anspruch, welches den Schritt aufweist, eine gestufte Kante in der Platte bzw. in dem Paneel in-line bzw. während der Herstellung zu schneiden.

10. Verfahren nach Anspruch 9, wobei die gestufte Kante eine Seitenkante ist und/oder wobei die gestufte Kante eine Endkante ist.

## Revendications

1. Procédé pour fabriquer une plaque de mousse isolante en polymère rigide du type comprenant une face inférieure (1), une face supérieure (2), et une couche de mousse (3) entre les faces (12), le procédé comprenant les étapes suivantes :
conduire une face inférieure (1) vers une zone de couchage (5) ;
déposer des réactifs de mousse liquide sur la face inférieure (1) ;
conduire une face supérieure (2) sur les réactifs de mousse ;
conduire le sandwich ainsi formé dans un four (10) dans lequel la mousse subit une expansion et une longueur continue de plaque de mousse est formée ;
conduire la plaque de mousse (15) du four (10) vers un poste de durcissement ;
couper la plaque de mousse à une certaine longueur (51) ;
former un empilement (50) de longueurs de plaques coupées (51) ;
insérer des entretoises (55) entre des plaques adjacentes (51) en empilement (50) ;
dans lequel les entretoises (55) comprennent une pluralité de bandes d'entretoises (55) qui sont espacées sur une plaque (51) ; et durcir en pile l'empilement (50) de plaques (51), et
comprenant en outre le fait de tourner de façon alternée des longueurs de plaques coupées (51) pendant la formation de l'empilement.

2. Procédé selon la revendication 1, dans lequel après le durcissement, les entretoises (55) sont retirées de l'empilement (50).

3. Procédé selon la revendication 2, comprenant le fait dépiler les plaques (51) pour retirer les entretoises (55).

4. Procédé selon l'une quelconque des revendications 1 à 3, dans lequel les bandes (55) s'étendent longitudinalement le long de la plaque (51) et les bandes (55) sont espacées transversalement sur la plaque (51).

5. Procédé selon l'une quelconque des revendications précédentes, dans lequel les bandes d'entretoises (55) sont en un matériau choisi parmi le métal, le bois et/ou les matières plastiques.

6. Procédé selon l'une quelconque des revendications précédentes, dans lequel le four (10) comprend un laminoir comportant des transporteurs de laminoir supérieur et inférieur (40, 41), le transporteur de laminoir supérieur (40) vérifiant l'élévation de la mousse et empêchant une sur-expansion.

7. Procédé selon l'une quelconque des revendications précédentes, dans lequel les réactifs de mousse liquide sont déposés dans une pluralité de flux espacés sur la face de base.

8. Procédé selon la revendication 7, dans lequel le procédé comprend un chauffage de la face de base avec les flux appliqués dessus, avant l'application de la face supérieure.

9. Procédé selon l'une quelconque des revendications précédentes comprenant l'étape consistant à découper en ligne un bord en feuillure dans le panneau.

10. Procédé selon la revendication 9, dans lequel le bord en feuillure est un bord latéral et/ou le bord en feuillure est un bord d'extrémité.
